# EUROPÄISCHE PATENTANMELDUNG

(11) **EP 0 921 032 A2**
(43) Veröffentlichungstag der Anmeldung: **09.06.1999**
(21) Anmeldenummer: 98121174.1
(22) Anmeldetag: 12.11.1998
(51) Int. Cl.: B60N 2/48

(54) **Kopfstütze für einen Sitz, insbesondere für einen Kraftfahrzeugsitz**

(30) Priorität: 06.12.1997 DE 19754168
(71) Anmelder: Volkswagen Aktiengesellschaft, 38436 Wolfsburg (DE)
(72) Erfinder: Rech, Bernd, Dr.-Ing., 38473 Tiddische-Hoitlingen (DE); Bergholz, Ralf, Dr., 38108 Braunschweig (DE)

(57) **Zusammenfassung**

Die Erfindung betrifft eine Kopfstütze für einen Sitz, insbesondere für einen Kraftfahrzeugsitz, mit klappbaren seitlichen Kopfstützenelementen, welche von einer Nichtgebrauchslage in eine Gebrauchslage bringbar sind. Um einem entsprechenden Sicherheitsstandard hinsichtlich Abstützung und Sichtfreiheit sowie einer mehrfunktionellen Anforderung an die Kopfstütze zu genügen, ist erfindungsgemäß vorgeschlagen, daß das seitliche Kopfstützenelement (2) in Nichtgebrauchslage in Kopfstützenkontur integriert ist und durch eine Klapp- oder Schwenkbewegung aus der Kopfstützenkontur herausklapp- bzw. schwenkbar ist.

## Beschreibung

Die Erfindung betrifft eine Kopfstütze für einen Sitz, insbesondere für einen Kraftfahrzeugsitz mit klappbarem seitlichen Kopfstützenelement, welches von einer Nichtgebrauchslage in eine Gebrauchslage bringbar ist, gemäß Oberbegriff des Patentanspruches 1.

Kopfstützen an Sitzen dienen vornehmlich dem Erhalt einer ermüdungsfreien Sitzhaltung. Dies gilt zumindest für Sitze mit Kopfstütze im allgemeinen Gebrauch. Darüber hinaus enthalten Kraftfahrzeugsitze ebenfalls Kopfstützen, die dort vorgeschrieben sind. Sie dienen nicht im wesentlichen der Einnahme einer bequemen Sitzhaltung, sondern sie dienen dazu, bei einem Unfall einen entsprechenden Widerhalt des Kopfes und des Genickes der entsprechenden Person zu gewährleisten.

So hat ein Fahrzeugsitz im wesentlichen sicherheitstechnische Aspekte zu erfüllen. Dies gilt insbesondere für die zumeist einstellbare Höhenposition sowie auch für die Kontur der Kopfstütze. Eine solche Kopfstütze für Kraftfahrzeuge ist beispielsweise aus der DE 3841024 C 1 bekannt. Zu erkennen ist, daß die Kopfstütze an sich aus dem Fahrersitz auf verstellbaren Schienen oder Stangen höhenverstellbar angeordnet ist und in der Regel eine geeignete Kontur aufweist. Diese Kontur ist zumeist gepolstert und soll den oben genannten sicherheitstechnischen Aspekten Genüge tun. Aus dieser Schritt ist ebenfalls ein mit der eigentlichen Kopfstütze oder dem genannten Gestänge verbindbares Seitenelement bekannt. Dieses Seitenelement ist aus einer Nichtgebrauchslage in eine Gebrauchslage bringbar. Das eigentliche Seitenteil ist mit einem an die Führungselemente oder Schienen der Kopfstütze anzubringenden Halteelement verbunden. Wie aus diesem Dokument zu entnehmen ist, dient die dort benannte seitliche Kopfstütze dazu, beispielsweise während einer längeren Autofahrt die Möglichkeit zu geben, den Kopf seitlich anzulegen. Sicherlich ist damit eine für den Kopf bequeme und die Halswirbel entlastende Sitzhaltung einnehmbar, jedoch ist eine auf diesen Zweck abgestellte und auch in der Form ausschließlich zu diesem Zweck brauchbare Kopfstütze, insbesondere für den Fahrer eines Kraftfahrzeuges, sicherheitstechnisch unakzeptabel. Die seitliche Kopfstütze ist dabei so konstruiert, daß sie unterhalb der eigentlichen Kopfstütze liegt, und erst dann eine Anlage des Kopfes an derselben erreicht wird, wenn der Kopf bereits extrem beidseitig geneigt ist. Die somit begünstigte Einnahme einer Schlafstellung ist natürlich für den Fahrer unakzeptabel und aus sicherheitstechnischen Gründen zu verwerfen. Eine Kopfstütze dieser Art kann lediglich für einen Beifahrer hilfreich sein.

Nachteilig ist auch, daß trotz Anbringung dieser zusätzlichen seitlichen Kopfstütze bei einem seitlichen Aufprall der Kopf nicht gestützt ist. Hinzu kommt, daß durch die tiefe Position der seitlichen Kopfstütze gegenüber der eigentlichen Kopfstütze bei einem seitlichen Aufprall eine enorme mechanische Belastung auf die Halswirbel, statt auf die Abstützung des Kopfes selbst, bringt. Hier kann es zum gezielten Genickbruch kommen.

Aus dem Stand der Technik sind weitere Anordnungen für Kopfstützen bekannt. So ist aus der G 9418167.5 eine Kopfstützenanordnung bekannt, bei der nachrüstbare seitliche Kopfstützenelemente vorgesehen sind. Diese werde nachträglich und vor allem starr mit der eigentlichen Kopfstütze verbunden. Sie können dabei wahlweise aus festen Elementen oder aber, wie aus diesem Dokument zu entnehmen ist, auch aus aufblasbaren Seitenelementen bestehen. Hierbei ist die Position der Seitenteile, bezogen auf die eigentliche Kopfstütze so gewählt, daß sie höhengleich mit derselben sind. D.h., die Seitenteile rahmen den Kopf des Fahrers oder der auf dem Sitz platznehmenden Person beidseitig ein. Nachteilig ist hierbei, daß diese Anordnung starr ist, und daß die Seitenteile mit dem eigentlichen Kopfstützenelement starr zu verbinden sind. Diese starre Anordnung der Seitenteile ist nachteilig, wenn beispielsweise vom jeweiligen Fahrer, bezogen auf seine Größe oder dergleichen, eines oder beide Seitenteile mal nicht erwünscht sind. Dies kann insbesondere dann hinderlich sein, wenn man bei Rangierfahrten, d.h., bei Langsamfahrten, bei der es auf eine genaue Positionierung des Fahrzeuges ankommt, eine freie Seitensicht benötigt.

Aus der DE 19513769 A 1 ist eine Anordnung bekannt, bei der auch ein Seitenteil an einer Kopfstütze angeordnet ist. Dies dient jedoch lediglich zur Aufnahme eines Telefons, wobei an eine entsprechende Abstützung oder an einen Schutz des Kopfes, bei einem Seitenaufprall, nicht gedacht ist. Hierzu fehlt im übrigen eine geeignete Anordnung, die den entsprechenden Schutz bieten würde.

Desweiteren sind vielfach Kopfstützenanordnungen bekannt, bei denen elektrische Elemente wie Lautsprecher und wie im besagten Fall, Telefone und dergleichen, integriert sind. Hierzu sind dann ebenfalls Seitenteile vorgesehen, wie beispielsweise aus der DE 3219257 A 1 bekannt. Aus diesem Dokument sind jedoch lediglich Seitenteile bekannt, die mit dem eigentlichen Kopfstützenelement fluchten und keinen seitlichen Widerhalt für den Kopf bieten. Im Vordergrund bei diesem Dokument steht die Anordnung der Lautsprechervorrichtung, die somit nahe am Kopf des Fahrzeuginsassen positioniert sind. Sicherheitstechnische Aspekte sind hierbei überhaupt nicht berücksichtigt.

Aus der DE 19516012 C 1 ist eine Schutzhaube für einen Kraftfahrzeugsitz bekannt. Diese Schutzhaube hat jedoch die Aufgabe, den Geräuschpegel für Fahrzeuginsassen zu reduzieren. Zu diesem Zweck ragt die Schutzhaube nicht nur mit seitlichen Wangen über die Kopfkontur des Fahrers hinaus, sondern ebenfalls mit einem über dem Kopf angeordneten Haubenelement, so daß sich eine geschlossene Schutzhaube ergibt, aus der nur nach vorne herausgesehen werden kann. Zum einen vermittelt eine auf diese Weise nahezu allseitig geschlossene Haube eine Beengung der Bewegungsfreiheit des Fahrzeuginsassen, insbesondere des Fahrzeugführers. Zum anderen können hierbei Hitzeentwicklungen entstehen, die unangenehm sind; aber vor allem ist die Sicht behindert.

Ausgehend von dieser Problematik und dem bisher im Stand der Technik Bekannten liegt der Erfindung somit die Aufgabe zugrunde, eine Kopfstütze mit seitlichen Kopfstützenelementen dahingehend weiterzubilden, daß die Seitenteile bei Bedarf eingestellt werden können und bei Nichtgebrauch in einer sicheren Position ruhen.

Darüber hinaus besteht die Aufgabe weiterhin auch darin, in der Gebrauchslage der Seitenteile weitergehende Funktionen verfügbar zu haben.

Die gestellte Aufgabe wird bei einer Kopfstütze der gattungsgemäßen Art erfindungsgemäß dadurch gelöst, daß das seitliche Kopfstützenelement in Nichtgebrauchslage in die Kopfstützenkontur integriert ist und durch eine Klapp- oder Schwenkbewegung aus der Kopfstützenkontur herausklapp- bzw. -schwenkbar ist.

Weitere vorteilhatte Ausgestaltungen, insbesondere hinsichtlich der aufgabengemäßen Forderung weiterer Funktionen, sind in den abhängigen Ansprüchen angegeben.

Wesentlich ist hierbei, daß zum einen die Kopfstützenelemente in Nichtgebrauchslage in die Kopfstützenkontur integriert sind, und somit eine für die Fahrzeuginsassen auch im Crashfalle sichere Position einnehmen. Dadurch, daß die Kopfstützenelemente aus der integrierten Kopfstützenkontur herausklapp- bzw. -schwenkbar sind, besteht der Vorteil, daß zum einen die richtige Höhe der Seitenteile bereits vorgegeben ist und zum anderen die gesamte Anordnung auch in Nichtgebrauchslage kompakter ist, als aus dem Stand der Technik bekannt. Hierdurch kommt es auch beim Wegklappen der Kopfstützenelemente in die Nichtgebrauchslage zu einer kompakten Ausführung, die die Sicht für den Fahrzeugführer und für weitere Fahrzeuginsassen nicht unnötig behindert.

Vorteilhaft ist natürlich, pro Kopfstütze zwei seitliche Kopfstützenelemente vorzusehen. Die Klapp- bzw. Schwenkbarkeit der seitlichen Kopfstützenelemente wird durch eine entsprechende Lage der Schwenk- oder Drehachse in geeigneter und vorteilhafter Weise erfüllt. Die Klappbewegung wird dabei durch eine vertikal angeordnete Klapp- bzw. Drehachse bewerkstelligt. Bei einer Verschwenkbewegung wird im wesentlichen eine horizontale Achse benötigt. Desweiteren können in diese integriert angeordneten seitlichen Kopfstützenelemente ebenfalls Lautsprecher integriert werden, die mit der Audioanlage und/oder ggf. mit der Telefonanlage des Kraftfahrzeuges verbunden sind. Dabei kann ebenfalls ein Mikrofon zu diesem Zweck mitintegriert sein. Die benötigten Kabel können in zweckmäßiger Weise in oder nahe der besagten Drehachsen verlegt sein. Werden die Drehachsen beispielsweise durch Röhrchen gebildet, so können durch dieselben hindurch die Kabel verlegt werden, ohne daß es bei der Klapp- oder Schwenkbewegung des Kopfstützenelementes zu einem schädlichen Verdrillen der Kabel kommt.

Desweiteren können in vorteilhafter Ausgestaltung der Erfindung Elemente zur Sprachübertragung an weitere Insassen vorgesehen sein. Hierzu können kombinierte Mikrofon/Kopfhöreranordnungen an jedem Sitz verteilt angeordnet sein.

Weiterhin können in vorteilhafter Weise Elemente zur Geräuschkompensation in die seitlichen Kopfstützenelemente integriert angeordnet sein. Bekannt sind solche Elemente zur Geräuschkompensation in der Regel in Flugzeugen. Dort werden in entsprechend reversierter Phasenverzögerung, d.h., in der Regel Phasenverzögerung um 180 Grad, Schallwellen erzeugt, die denjenigen der im Betrieb vorherrschenden Schwingung entsprechen. Hierbei kommt es zu einer Auslöschung, wodurch gewisse unangenehme Geräusche kompensierbar sind. Hierzu werden normalerweise in Flugzeugen an gegebenen Orten Schallerzeuger aufgestellt. Bei der vorliegenden Erfindung hingegen ist es vorteilhaft, daß solche Gegenschallerzeuger in entsprechend kleiner Ausführung in die erfindungsgemäßen Kopfstützenelemente integriert werden können.

Ebenso können weitere elektronische Elemente, beispielsweise zur Sprachsteuerung von Navigationssystemen und dergleichen integriert sein.

Insgesamt ist vorteilhaft, daß die seitlichen Kopfstützenelemente durch ihre integrierte Anordnung in der Nichtgebrauchslage zu keiner Sichtbehinderung führen. Will also der Fahrzeugführer Rangierfahrten durchführen, so kann er die Kopfstützenelemente wegklappen, ohne das dieselben in eine anderen Position wiederum sichtbehindernd wirken.

Darüber hinaus weisen die Seitenteile durch ihre entsprechende Klapp- bzw. Schwenkanordnung an der Kopfstütze auch für den Fall der notwendigen Seitenabstützung die richtige Position auf. Der Kopf wird somit auch bei einem Seitenaufprall optimal geschützt.

Die Erfindung ist in der Zeichnung dargestellt und nachfolgend näher beschrieben.

Es zeigt:
Figur 1: Draufsicht auf eine erfindungsgemäße Kopfstütze mit klappbaren Seitenteilen.
Figur 2: Erfindungsgemäße Kopfstütze in Draufsicht mit verschwenkbaren Seitenteilen.
Figur 3: Seitenansicht zu Figur 2.

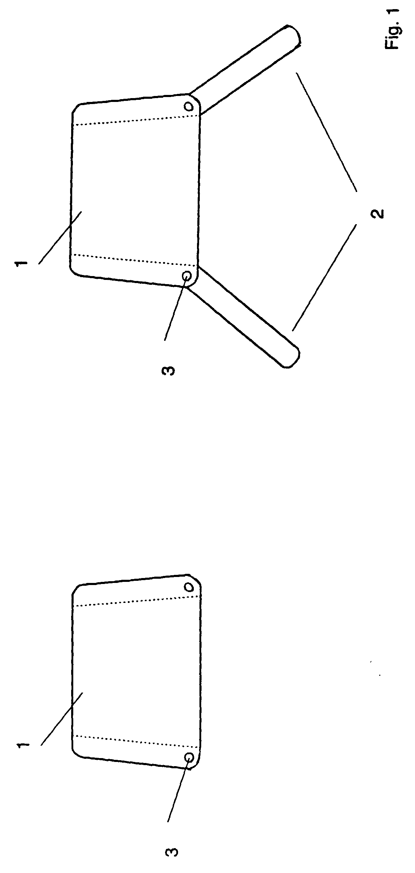

Figur 1 zeigt in Draufsicht zwei Abbildungen. Die erste linke Abbildung zeigt eine Draufsicht, d.h., eine Ansicht von oben auf die Kopfstütze 1. So zeigt sie die Nichtgebrauchslage der zusätzlichen Kopfstützenelemente 2. Diese sind so in die Kopfstütze integriert, daß bei Nichtgebrauchslage eine geschlossene Kontur der Kopfstütze, ohne daß weitere Kanten vorspringen, entstehen. Der rechte Bildteil von Figur 1 zeigt die ausgeklappte Position der erfindungsgemäßen Kopfstützenelemente 2. Die Klappachsen 3 der beiden Kopfstützenelemente sind dabei vertikal angeordnet. Dabei werden die Kopfstützenelemente aus der Position im linken Bildteil durch einfaches Drehen herausgeklappt. Hierbei ist desweiteren zu erkennen, daß die Seitenteile so in die geschlossene Kontur einbringbar sind, daß sich der gedachte Abstand nach hinten hin verjüngt. Dies hat zur Konsequenz, daß bei einem Frontalaufprall, in denen sämtliche Massen relativ zum Fahrzeug nach vorne beschleunigt werden, die Seitenteile nicht ungewollt herausschleudern werden. D.h., es entsteht kein aktives Drehmoment, über welches im Falle eines Aufpralles die Kopfstützenelemente nach vorne schlagen würden. Ebenfalls bei einem Aufprall von hinten sind die Kopfstützenelemente 2 in Nichtgebrauchslage in nichtgefährdender Position und verharren sogar darin. Für den Fall, daß die Kopfstützenelemente 2 gemäß dem rechten Bildteil ausgeklappt sind, gilt im Falle eines Aufpralles dasselbe, d.h., hierbei ist die Klappbewegung nicht beliebig nach vorne, sondern in einer gewissen Endposition gesperrt. Eine Beschleunigung nach vorne durch einen Frontalaufprall läßt die Seitenteile nicht zusammenschlagen, so daß der Fahrer bzw. der Fahrzeuginsasse nicht gefährdet ist.

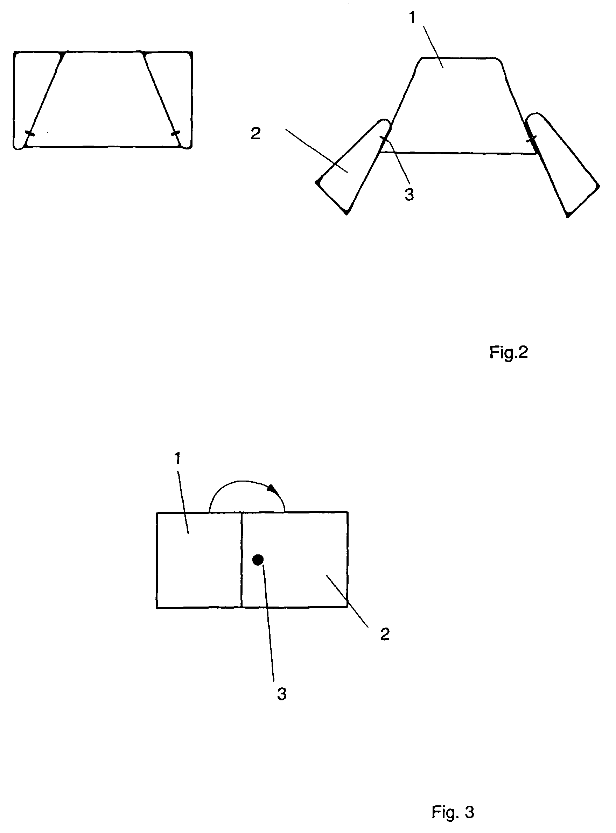

Figur 2 zeigt eine weitere Ausführungsform der erfindungsgemäßen Kopfstützenanordnung, bei der die grundsätzlichen Merkmale wesensgleich der erstgenannten Ausführungsform sind. D.h., auch hierbei ist im linken Bildteil die Nichtgebrauchslage der Kopfstützenelemente dargestellt.

In dieser Nichtgebrauchslage ergibt sich wiederum gemäß der Erfindung eine geschlossene Außenkontur der Kopfstütze. Auch hierbei entsteht keine Sichtbehinderung bei eingeklappten bzw. nicht gebrauchten Kopfstützenelementen 2. Die Drehachse 3 liegt hierbei im wesentlichen horizontal. Dabei sind die beiden Drehachsen jedoch nicht parallel fluchtend. Dies ergibt sich daraus, daß in vorteilhafter Weise bei der eigentlichen Kopfstützen 1 eine Trapezform in dieser dargestellten Ansicht angestrebt ist. Hierdurch kommt es in Verbindung mit der Schwenkbewegung von der Nichtgebrauchslage in die Gebrauchslage der Kopfstützenelemente zu einer entsprechend abgeschrägten bzw. geneigten Stellung der Seitenteile 2. Hierbei ist eine entsprechend gleiche Position der Kopfstützenelemente erreicht wie in Figur 1. Durch eine in dieser Art angewinkelte und nicht rechtwinklige Anordnung der Kopfstützenelemente 2 ist ein größeres Gesichtsfeld, und damit eine bessere Sicht möglich.

Auch hierbei gilt, daß im Falle eines Aufpralles von hinten die zusätzlichen Kopfstützenelemente 2 nicht herausgeschleudert werden. Bei einem Aufprall von vorne kann bei entsprechend mittiger Anordnung der Drehachse ein unkontrolliertes Herausschleudem deshalb vermieden werden, weil es beim Aufprall zu keinem bevorzugten Drehmoment kommt.

Hierzu zeigt Figur 3 explizit die Seitenansicht der Kopfstütze im Gebrauchszustand der seitlichen Kopfstützenteile. In dieser Darstellung ist erkennbar, daß die Schwenkachse mittig angeordnet ist, so daß es in der Nichtgebrauchslage oder aus derselben heraus bei einer Beschleunigung von vorne nicht zu einem die Verschwenkbewegung unkontrolliert auslösenden Drehmoment kommen kann. Somit sind diese erfindungsgemäßen seitlichen Kopfstützenteile nicht nur mit den oben beschriebenen Vorteilen versehen, sondern genügen auch einem hohen Sicherheitsstandard.

## Patentansprüche

1. Kopfstütze für einen Sitz, insbesondere für einen Kraftfahrzeugsitz, mit klappbarem seitlichen Kopfstützenelement, welches von einer Nichtgebrauchslage in eine Gebrauchslage bringbar ist,
dadurch gekennzeichnet,
daß das seitliche Kopfstützenelement (2) in Nichtgebrauchslage in die Außenkontur der Kopfstütze (1) integriert ist, und durch eine Klapp- oder Schwenkbewegung aus der Kopfstützenkontur herausklapp- bzw. -schwenkbar ist.

2. Kopfstütze für einen Sitz nach Anspruch 1,
dadurch gekennzeichnet,
daß an der Kopfstütze (1) zwei seitliche Kopfstützenelemente (2) in entsprechend in die Kopfstützenkontur in Nichtgebrauchslage integrierte Weise vorgesehen sind.

3. Kopfstütze für einen Sitz nach Anspruch 1 oder 2,
dadurch gekennzeichnet,
daß die seitlichen Kopfstützenelemente (2) aus der Kopfstützenkontur zum Erreichen der Gebrauchslage jeweils um eine vertikal Achse (3) klappbar sind.

4. Kopfstütze für einen Sitz nach Anspruch 1 oder 2,
dadurch gekennzeichnet,
daß die seitlichen Kopfstützenelemente (2) jeweils um eine horizontale Achse (3) in die Gebrauchslage schwenkbar sind.

5. Kopfstütze für einen Sitz nach einem oder mehreren der vorhergehenden Ansprüche,
dadurch gekennzeichnet,
daß die seitlichen Kopfstützenelemente (2) mit integrierten Lautsprechern versehen sind.

6. Kopfstütze für einen Sitz nach einem oder mehreren der vorhergehenden Ansprüche,
dadurch gekennzeichnet,
daß in eines oder beide Kopfstützenelemente (2) pro Kopfstütze (1) ein Mikrofon integriert ist.

7. Kopfstütze für einen Sitz nach einem oder mehreren der vorhergehenden Ansprüche,
dadurch gekennzeichnet,
daß Elemente zur Sprachübertragung an Insassen an jedem der Kopfstützen (1) bzw. der seitlichen Kopfstützenelemente (2) angeordnet sind.

8. Kopfstütze für einen Sitz nach einem oder mehreren der vorhergehenden Ansprüche,
dadurch gekennzeichnet,
daß in die seitlichen Kopfstützenelemente (2) Elemente zur Geräuschkompensation integriert sind.

9. Kopfstütze für einen Sitz nach einem oder mehreren der vorhergehenden Ansprüche,
dadurch gekennzeichnet,
daß weitergehende elektronische Elemente, wie Kommunikations- und/oder Navigationssysteme und/oder sprachgesteuerte Eingabeschnittstellen in die seitlichen Kopfstützenelemente (2) integriert angeordnet sind.

10. Kopfstütze für einen Sitz nach einem oder mehreren der vorhergehenden Ansprüche,
dadurch gekennzeichnet,
daß die notwendigen Kabel in oder nahe der Drehachsen (3) der seitlichen Kopfstützenelemente (2) verlegt angeordnet sind.

11. Kopfstütze für einen Sitz nach einem oder mehreren der vorhergehenden Ansprüche,
dadurch gekennzeichnet,
daß die Schwenkachse bzw. die Schwenkachsen (3) so angeordnet sind, daß dieselben parallel verschoben zum Massenschwerpunkt bzw. Schwerpunktslinie in Richtung nach vorne in bzw. an den seitlichen Kopfstützenelemente (2) angeordnet sind.

12. Kopfstütze für einen Sitz nach einem oder mehreren der vorhergehenden Ansprüche,
dadurch gekennzeichnet,
daß die seitlichen Kopfstützenelemente (2) in Nichtgebrauchslage sich nach hinten auf einer Trapezkontur annähernden Weise positioniert sind, derart, daß sie im Falle von Beschleunigungskräften von vorne oder hinten nicht ungewollt und unkontrolliert aus der Nichtgebrauchslage herausgeschleudert werden.
